# EUROPÄISCHE PATENTANMELDUNG

(11) **EP 1 477 371 A2**
(43) Veröffentlichungstag der Anmeldung: **17.11.2004**
(21) Anmeldenummer: 04008285.1
(22) Anmeldetag: 06.04.2004
(51) Int. Cl.: B60R 19/34, F16F 7/12

(54) **Crashbox**

(30) Priorität: 15.05.2003 DE 10321766
(71) Anmelder: Benteler Automobiltechnik GmbH, 33104 Paderborn (DE); Peugeot Citroen Automobiles SA, 78140 Vélizy Villacoublay (FR)
(72) Erfinder: Soumireu-Mourat, Mathieu, 89000 Auxerre (FR); Baessens, Olivier, 78280 Guyancourt (FR); Buon, Fabien, 92130 Issy-Les-Moulineaux (FR); Jacquemard, Ivan, 92130 Issy-Les-Moulineaux (FR); Bonte, Eric, 28410 Boutigny/Opton (FR)
(74) Vertreter: Ksoll, Peter, Dr.-Ing.

(57) **Zusammenfassung**

Eine Crashbox (1), die zwischen einem Längsträger und einem Querträger im Stoßfänger eines Kraftfahrzeugs eingebaut wird, weist ein als länglicher Hohlkörper gestaltetes Deformationsprofil (2) auf. Das Deformationsprofil (2) ist mit Durchbrechungen (21-27) versehen, welche den in einem Crashfall auftretenden Kraftverlauf über den Deformationsweg vergleichmäßigen. Vorteilhafterweise ist das Deformationsprofil (2) aus zwei U-förmig konfigurierten Schalenkörpern (3, 4) zusammengesetzt, wobei Durchbrechungen (21-25) entlang der Längskanten (19, 20) des Deformationsprofils (2) vorgesehen sind. Die Größe der Durchbrechungen (21-25) nimmt vom querträgerseitigen Ende (12) des Deformationsprofils (2) zum längsträgerseitigen Ende (11) hin ab. Ferner sind auch in den Vertikalseiten (9, 10) des Deformationsprofils (2) im Bereich des längsträgerseitigen Endes (11) Durchbrechungen (26, 27) vorgesehen.

## Beschreibung

Die Erfindung betrifft eine Crashbox für den Stoßfänger eines Kraftfahrzeugs gemäß den Merkmalen im Oberbegriff von Anspruch 1.

Stoßfänger werden quer an Front und Heck eines Kraftfahrzeugs zwischen der die Karosserie abschließenden Kunststoffverschalung und dem Rahmen des Kraftfahrzeugs angeordnet. Um Beschädigungen der Fahrzeugstruktur bei Front- oder Heckaufprällen mit geringen Geschwindigkeiten zu vermeiden, werden Deformationselemente, sogenannte Crashboxen, integriert. Crashboxen sind dünnwandige, in der Regel rechteckige Elemente aus Stahl, Aluminium oder Kunststoff. Sie können durch Fügen aus gepressten Blechschalen oder einteilig, beispielsweise als extrudiertes Aluminiumprofil, hergestellt sein.

Angeordnet zwischen Fahrzeuglängsträger und dem Stoßfänger-Querträger absorbieren die Crashboxen die aus einem Anprall resultierende kinetische Energie, indem diese in Verformungsarbeit umgewandelt wird. Hierdurch soll das Überschreiten eines kritischen Lastniveaus, bei dem der Längsträger bleibend beschädigt werden kann, vermieden werden.

Durch die DE 100 14 469 A1 zählt eine in der Praxis bewährte Crashbox zum Stand der Technik. Sie hat einen rechteckigen Querschnitt und ist aus einer Oberschale und einer Unterschale gefertigt. Diese Bauart zeichnet sich durch eine hohe Quersteifigkeit aus. Durch Sicken in den Crashboxen soll ein gezieltes Verformen an einem bestimmten Punkt eingeleitet werden.

Auch aus der JP 02175452 A (Patent Abstracts of Japan) geht eine Crashbox mit einem als länglicher Hohlkörper gestalteten Deformationsprofil mit rechteckiger Querschnittskonfiguration hervor. Das Deformationsprofil weist sich quer zu seiner Längsachse erstreckende Sicken auf. Die Sicken sollen den Faltvorgang der Crashboxen fördern und vergleichmäßigen.

Die Absorption der Aufprallenergie erfolgt durch ein Falt-Beulen der Crashboxen. Dieser Vorgang wird gezielt durch die Anordnung der Sicken beeinflusst. Zudem bestimmt die Wahl des Querschnitts der Crashboxen, die Materialgüte und die Materialdicke das Falt-Beul-Verhalten und das Kraftniveau in Richtung der Längsachse der Crashboxen.

Dennoch stellt man bei den bekannten Bauarten unterschiedlich große Schwankungen im Kraftverlauf beim Falt-Beul-Vorgang über den Deformationsweg fest. Bei den in den Kraftfahrzeugen zur Verfügung stehenden geringen Bauräumen ist es erforderlich, dass die kinetische Energie auf einen möglichst geringen Deformationsweg durch die Crashboxen absorbiert wird. Dies kann nur dann erreicht werden, wenn die Crashbox auf ein möglichst gering unter dem zulässigen Lastniveau des Längsträgers deformiert und die Kraft über den gesamten Deformationsweg nahezu konstant ist.

Der Erfindung liegt daher ausgehend vom Stand der Technik die Aufgabe zugrunde, eine Crasbox zu schaffen, welche auf einem Lastniveau deformiert. welches nur wenig unterhalb des maximal zulässigen Lastniveaus im Längsträger liegt und die Kraft über dem Deformationsweg möglichst konstant ist.

Die Lösung dieser Aufgabe besteht nach der Erfindung in einer Crashbox gemäß Anspruch 1.

Danach ist das Deformationsprofil mit Durchbrechnungen, beispielsweise in Form von Bohrungen versehen, welche in einem Crashfall eine Vergleichmäßigung des Kraftverlaufs über den Deformationsweg bewirken. Die Erfindung macht sich hierbei die Erkenntnis zu eigen, dass durch gezielte Anordnung von Durchbrechungen unterschiedlicher Durchmesser, Form und Lage im Deformationsprofil sich in die Kraft, bei dem das Falt-Beulen erfolgt, dahingehend beeinflussen lässt, dass Kraftspitzen reduziert werden. Auf diese Weise ergibt sich ein wesentlich verbesserter Kraft-Deformationsweg-Verlauf mit geringen Schwankungen des Kraftniveaus. Hierdurch wird eine wesentliche Annäherung an den idealen Kraft-Deformations-Wegverlauf erreicht. Es kann somit unter Berücksichtigung des maximal zulässigen Lastniveaus des Längsträgers ein Maximum an Aufprallenergie bei minimalem Deformationsweg durch die Crashboxen absorbiert werden.

Die Gestaltung, Anzahl und Anordnung der Durchbrechungen ist abhängig von den spezifischen Belastungsverhältnissen des jeweiligen Fahrzeugdesigns und dem zulässigen maximalen Kraftniveau des eingesetzten Längsträgers.

Die erfindungsgemäße Crashbox mit den Durchbrechungen erlaubt gegenüber herkömmlichen Crashboxen eine Verringerung des erforderlichen Deformationswegs. Sie ermöglicht eine höhere Energieabsorption bei gleichbleibendem Kraftniveau über den Deformationsweg. Darüber hinaus wird die Gefahr einer Beschädigung der Fahrzeugstruktur bei Aufprällen mit geringer Geschwindigkeit durch etwaige Kraftspitzen in den Crashboxen reduziert.

Nach den Merkmalen von Patentanspruch 2 weist das Deformationsprofil sich quer zu seiner Längsachse erstreckende Sicken auf. Durch die Sicken wird eine gezielte Deformation der Crashbox begünstigt.

Die Sicken dienen im Falle eines Anpralls, der zulässige Grenzen übersteigt, als Initiator für ein gezieltes Verformen an dem hier vorgegebenen Punkt. Durch Form, Art und Anzahl der Sicken kann die geforderte Belastungsgrenze bestimmt werden. Anzahl, Konfiguration und insbesondere die Anordnung von Sicken und Durchbrechungen relativ zueinander werden in Abhängigkeit vom Kraftfahrzeugtyp, dem zur Verfügung stehenden Deformationsweg und der Längsträgerkonfiguration aufeinander abgestimmt.

Die Crashboxen können sowohl aus Leichtmetall, beispielsweise Aluminium oder einer Aluminiumlegierung, als auch aus Stahl bestehen. Grundsätzlich können die Deformationsprofile presstechnisch in Schalenbauweise oder als tiefgezogene Hohlkörper hergestellt werden.

Eine besonders vorteilhafte Ausgestaltung einer Crashbox ist in den Merkmalen von Patentanspruch 3 charakterisiert. Das Deformationsprofil ist aus zwei U-förmig konfigurierten Schalenkörpern zusammengesetzt, die sich endseitig ihrer Schenkel überlappen. Die Durchbrechungen sind hierbei entlang der Längskanten des Deformationsprofils vorgesehen. Vorzugsweise besitzt das Deformationsprofil gerundete Längskanten.

Gemäß den Merkmalen von Patentanspruch 4 nimmt die Größe der Durchbrechungen vom querträgerseitigen Ende des Deformationsprofils zum längsträgerseitigen Ende hin ab. Diese Maßnahme unterstützt vorteilhaft den gewünschten konstanten bzw. gleichmäßigen Kraftverlauf über dem Deformationsweg.

Zudem können auch die Vertikalseiten des Deformationsprofils im Bereich des längsträgerseitigen Endes mit Durchbrechungen versehen sein, wie dies Patentanspruch 5 vorsieht.

Grundsätzlich kann der erfindungsgemäße Kerngedanke der Beeinflussung des Falt-Beulverhaltens durch gezielte Durchbrechungen im Deformationsprofil für alle Arten und Materialien von Crashboxen eingesetzt werden. Für die Praxis vorteilhaft wird eine Crashbox gemäß Patentanspruch 6 angesehen mit einem Deformationsprofil, welches pyramidenstumpfartig ausgebildet ist und sich vom längsträgerseitigen Ende zum querträgerseitigen Ende hin verjüngt.

Grundsätzlich kann die Crashbox mit dem Längslenker auf unterschiedliche Art gefügt sein, beispielsweise mittels einer Schweißverbindung oder einer Schraubverbindung. Insbesondere bei der Festlegung mittels Verbindungsschrauben weist das Deformationsprofil einen längsträgerseitigen Flansch auf. Die verschraubten Crashboxen sind leicht und kostengünstig austauschbar.

Die Erfindung ist nachfolgend anhand eines Ausführungsbeispiels beschrieben.
Es zeigen:
- Figur 1: in perspektivischer Darstellungsweise eine erfindungsgemäße Crashbox;
- Figur 2: ebenfalls in perspektivischer Darstellungsweise eine erfindungsgemäße Crashbox in einer Ansicht vom längsträgerseitigen Ende her und
- Figur 3: ein Diagramm mit der Darstellung verschiedener Kraftverläufe über dem Deformationsweg.

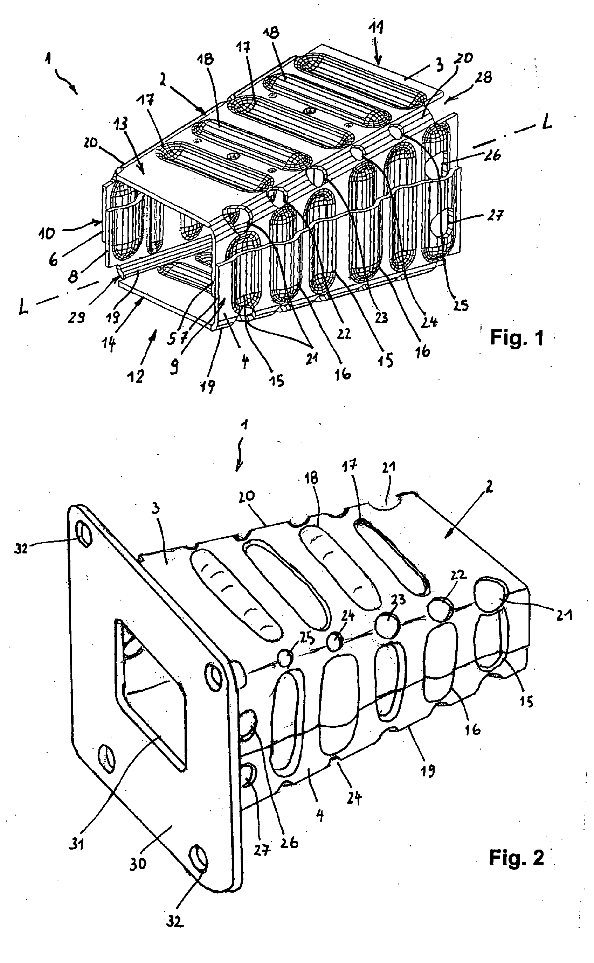

Figur 1 zeigt in perspektivischer Darstellungsweise eine Crashbox 1. Die Crashbox 1 kommt als Energie absorbierendes Deformationselement jeweils zwischen einem hier nicht dargestellten Querträger und einem Längsträger des Kraftfahrzeugrahmens zum Einsatz.

Die Crashbox 1 besitzt ein als länglicher Hohlkörper gestaltetes Deformationsprofil 2. Das Deformationsprofil 2 ist eine dünnwandige Metallkonstruktion, die aus zwei U-förmig konfigurierten Schalenkörpern 3, 4 zusammengesetzt ist. Die Schalenkörper 3, 4 überlappen sich endseitig ihrer Schenkel 5, 6, 7, 8 und sind entlang dieser gefügt. Hierbei ist der Schenkel 5 des in Bildebene oberen Schalenkörpers 3 im Überlappungsbereich auf der einen Vertikalseite 9 innenseitig und der Schenkel 6 auf der anderen Vertikalseite 10 außenseitig des unteren Schalen körpers 4 angeordnet.

Das Deformationsprofil 2 ist pyramidenstumpfartig ausgebildet und verjüngt sich vom längsträgerseitigen Ende 11 zum querträgerseitigen Ende 12 hin. Man erkennt, dass sowohl in den Horizontalseiten 13, 14 als auch in den Vertikalseiten 9, 10 des Deformationsprofils 2 eine Anzahl sich quer zur Längsachse L des Deformationsprofils 2 erstreckende Sicken 15, 16, 17, 18 vorgesehen sind. Die Sicken 15 und 17 in den Vertikalseiten 9, 10 und den Horizontalseiten 13, 14 sind jeweils nach innen in Richtung zur Mittellängsachse L eingezogen, wohingegen die Sicken 16 und 18 nach außen gebeult sind.

Das Deformationsprofil 2 besitzt gerundete Längskanten 19, 20. Entlang der Längskanten 19, 20 ist das Deformationsprofil 2 mit einer Anzahl von Durchbrechungen 21-25 versehen. Die Größe der Durchbrechungen 21-25 nimmt vom querträgerseitigen Ende 12 des Deformationsprofils 2 zum längsträgerseitigen Ende 11 hin ab. Im Bereich des längsträgerseitigen Endes 11 sind auch in den Vertikalseiten 9, 10 übereinander liegende Durchbrechungen 26, 27 vorgesehen. Ferner erkennt man an den Enden 11 bzw. 12 Ausnehmungen 28, 29 jeweils im Bereich der Längskanten 19, 20 besitzt.

Anordnung, Größe und Gestaltung der Durchbrechungen 21-27 sind so auf das Deformationsprofil 2 abgestimmt, dass der in einem Crashfall auftretende Kraftverlauf beim Falt-Beul-Vorgang über den Deformationsweg nahezu konstant gleichmäßig verläuft. Hierdurch wird eine gleichmäßige Kraftaufnahme über den Deformationsweg mit geringen Schwankungen knapp unterhalb der maximal zulässigen Kraft erreicht. Kraftspitzen während des Deformationsvorgangs werden vermieden.

Die Darstellung der Figur 2 entspricht vom grundsätzlichen Aufbau der Crashbox 1 mit dem Deformationsprofil 2. Die Bauteilkomponenten sind daher mit gleichen Bezugszeichen versehen. Längsträgerseitig ist an das Deformationsprofil 2 ein Flansch 30 geschweißt. Dieser besitzt eine zentrale Ausnehmung 31 sowie Montageöffnungen 32, über die die Crashbox 1 am Längsträger festgelegt werden kann.

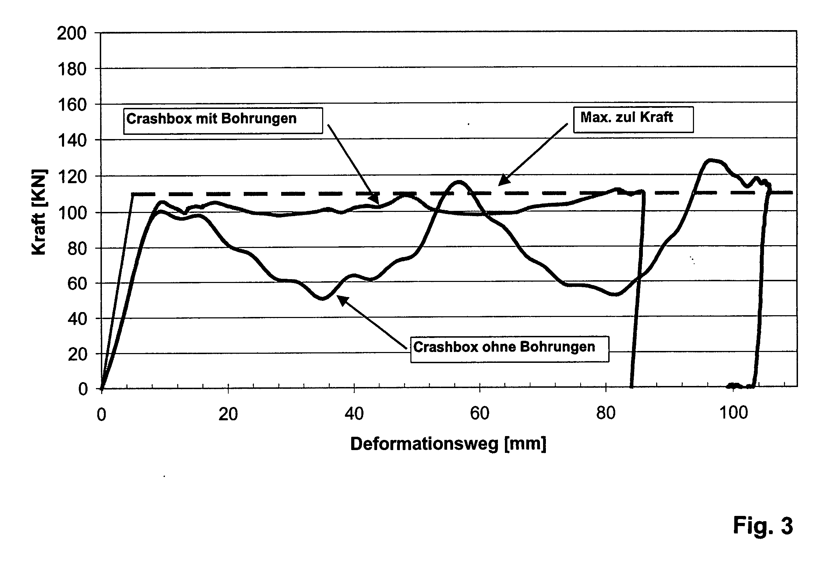

Bei dem in der Figur 3 dargestellten Diagramm ist die Kraft [kN] aufgetragen über dem Deformationsweg [mm]. Die in gestrichelter Linienführung dargestellte Kurve I zeigt die maximal zulässige Kraft in einem Längsträger. Die Kurve II gibt den Kraftverlauf über den Deformationsweg bei einer Crashbox ohne die erfindungsgemäß vorgesehenen Durchbrechungen wieder. Man erkennt deutlich, dass der Kraftverlauf schwankt und Kraftspitzen auftreten, die das maximal zulässige Lastniveau des Längsträgers überschreiten.

Die Kurve III zeigt den Kraftverlauf einer erfindungsgemäßen Crashbox 1. Deutlich erkennt man, dass der Kraftverlauf über den Deformationsweg annähernd gleich bleibt und nur gering unterhalb der maximal zulässigen Kraft im Längsträger liegt. Dies macht deutlich, dass unter Berücksichtigung des maximal zulässigen Lastniveaus des Längsträgers ein Maximum an Aufprallenergie bei minimalem Deformationsweg durch die Crashboxen 1 absorbiert werden kann.

Eine erfindungsgemäße Crashbox 1 ermöglicht bei gewichtsreduzierter Bauweise eine Verringerung des erforderlichen Deformationswegs bzw. ermöglicht alternativ eine höhere Energieabsorption bei gleichbleibendem Deformationsweg. Kraftspitzen während der Deformation der Crashboxen 1 werden deutlich reduziert. Insgesamt ist die Gefahr einer Beschädigung der Fahrzeugstruktur bei Aufprall mit geringer Geschwindigkeit vermindert.

### Bezugszeichenaufstellung

- 1 -: Crashbox
- 2 -: Deformationsprofil
- 3 -: Schalenkörper
- 4 -: Schalenkörper
- 5 -: Schenkel
- 6 -: Schenkel
- 7 -: Schenkel
- 8 -: Schenkel
- 9 -: Vertikalseite v. 1
- 10 -: Vertikalseite v. 1
- 11 -: längsträgerseitiges Ende v. 1
- 12 -: querträgerseitiges Ende v. 1
- 13 -: Horizontalseite v. 1
- 14 -: Horizontalseite v. 1
- 15 -: Sicke
- 16 -: Sicke
- 17 -: Sicke
- 18 -: Sicke
- 19 -: Längskante
- 20 -: Längskante
- 21 -: Durchbrechung
- 22 -: Durchbrechung
- 23 -: Durchbrechung
- 24 -: Durchbrechung
- 25 -: Durchbrechung
- 26 -: Durchbrechung
- 27 -: Durchbrechung
- 28 -: Ausnehmung
- 29 -: Ausnehmung
- 30 -: Flansch
- 31 -: Ausnehmung
- 32 -: Montageöffnung
- 33 -: Dorn

- L -: Längsachse v. 2

## Patentansprüche

1. Crashbox zur Eingliederung zwischen Längsträger und Querträger im Stoßfänger eines Kraftfahrzeugs, welche ein als länglicher Hohlkörper gestaltetes Deformationsprofil (2) in einer Metallkonstruktion aufweist, **dadurch gekennzeichnet, dass** das Deformationsprofil (2) den in einem Crashfall auftretenden Kraftverlauf über den Deformationsweg vergleichmäßigende Durchbrechungen (21-27) aufweist.

2. Crashbox nach Anspruch 1, **dadurch gekennzeichnet, dass** das Deformationsprofil (2) sich quer zu seiner Längsachse (L) erstreckende Sicken (15-18) aufweist.

3. Crashbox nach Anspruch 1 oder 2, **dadurch gekennzeichnet, dass** das Deformationsprofil (2) aus zwei U-förmig konfigurierten Schalenkörpern (3, 4) zusammengesetzt ist, welche sich endseitig ihrer Schenkel (5-8) überlappen, wobei die Durchbrechungen (21-25) entlang von Längskanten (19, 20) des Deformationsprofils (2) vorgesehen sind.

4. Crashbox nach einem der Ansprüche 1 bis 3, **dadurch gekennzeichnet, dass** die Größe der Durchbrechungen (21-25) vom querträgerseitigen Ende (12) des Deformationsprofils (2) zum längsträgerseitigen Ende (11) hin abnimmt.

5. Crashbox nach einem der Ansprüche 1 bis 4, **dadurch gekennzeichnet, dass** Vertikalseiten (9, 10) des Deformationsprofils (2) im Bereich des längsträgerseitigen Endes (11) mit Durchbrechungen (26, 27) versehen ist.

6. Crashbox nach einem der Ansprüche 1 bis 5, **dadurch gekennzeichnet, dass** das Deformationsprofil (2) pyramidenstumpfartig ausgebildet ist und sich vom längsträgerseitigen Ende (11) zum querträgerseitigen Ende (12) hin verjüngt.
